(19) Europäisches Patentamt
European Patent Office
Office européen des brevets

(11) **EP 4 718 116 A1**

(12) **EUROPEAN PATENT APPLICATION**
published in accordance with Art. 153(4) EPC

(43) Date of publication:
**01.04.2026 Bulletin 2026/14**

(21) Application number: **24819153.8**

(22) Date of filing: **21.05.2024**

(51) International Patent Classification (IPC):
**G01S 13/90** (2006.01)

(52) Cooperative Patent Classification (CPC):
**G01S 13/90**

(86) International application number:
**PCT/JP2024/018657**

(87) International publication number:
**WO 2024/252920 (12.12.2024 Gazette 2024/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.06.2023 JP 2023095429**

(71) Applicant: **Nec Aerospace Systems, Ltd.**
**Tokyo 183-8502 (JP)**

(72) Inventors:
• **NAGINO Ryo**
**Fuchu-shi, Tokyo 183-8502 (JP)**
• **OURA Tomoko**
**Fuchu-shi, Tokyo 183-8502 (JP)**

(74) Representative: **Vossius & Partner**
**Patentanwälte Rechtsanwälte mbB**
**Siebertstraße 3**
**81675 München (DE)**

(54) **IMAGE REPRODUCTION DEVICE FOR INVERSE SYNTHETIC APERTURE RADAR, IMAGE REPRODUCTION METHOD, AND RECORDING MEDIUM**

(57) This image reproduction device performs range compression on a reception signal obtained as a result of object observation using an inverse synthetic aperture radar, decomposes the range-compressed signal into a plurality of subapertures in a time direction such that adjacent subapertures partially overlap, performs azimuth compression on each of the sub-apertures, adds a secondary phase thereto, and performs de-rotation, and thereafter reproduces an image by synthesizing the plurality of subapertures and performing secondary azimuth compression using the secondary phase.

Fig.1

## Description

### Technical Field

The present disclosure relates to an image reconstruction device for an inverse synthetic aperture radar, an image reconstruction method, and a recording medium.

### Background Art

A synthetic aperture radar (SAR) is known as a microwave sensor that is mounted on an artificial satellite or an aircraft and observes the earth's surface while moving, in which an antenna that is a small aperture surface is synthesized to virtually form a large aperture surface (diameter of the radar), and radio waves received by repeating transmission and reception are synthesized in consideration of a Doppler effect to improve resolution. An inverse synthetic aperture radar (inverse SAR (ISAR)) that improves resolution by using movement and attitude change of a target (object) instead of movement of a radar antenna is known, in which range compression and azimuth compression of an object are performed to image the target on range and azimuth axes. On the other hand, space debris such as fragments of used satellites and rockets is orbiting the earth at a high speed, and attempts have been made to accurately grasp an orbit of the space debris by space situation awareness (SSA) in order to protect artificial satellites and spacemen from the threat of the space debris. In the SSA, it is required to acquire not only position information but also image information of a space object in order to improve a degree of identification.

Various technologies have been developed for image generation of the ISAR. PTL 1 discloses range alignment and rotation correction of a high resolution image in an ISAR, in which a full aperture of data samples is received and subdivided into a plurality of subapertures, a coarse image is generated for each subaperture and prominent points are selected, range alignment correction and rotation correction are performed for each coarse image, phase errors are corrected by using a phase gradient autofocus algorithm, the coarse images are combined, and a single high resolution image is generated. In PTL 2, in a radar device using an ISAR system, a target acquired from a reception signal is tracked on both axes of a range and a Doppler frequency to obtain an image center of the target, the target is imaged on the range and Doppler frequency axes by range compression and azimuth compression, a plurality of ISAR images is generated by subdividing a synthetic aperture length in time series, a main axis of the plurality of target images is extracted to observe a temporal change in rotation of the main axis as a rotation speed, and an image dimension in a cross range is corrected by the rotation speed to acquire absolute position information of the target image.

### Citation List

### Patent Literature

PTL 1: US 6255981 B1

PTL 2: JP 2017-3494 A

### Summary of Invention

### Technical Problem

In image reconstruction processing of an ISAR, a high resolution image can be obtained by performing range compression, azimuth compression, and various types of correction processing on a reception signal. In the case of a radar that can image a radar signal by an ISAR technology but is not intended for ISAR processing, such as an SSA radar, a high resolution image cannot be obtained by simple synthetic aperture processing when a pulse repetition frequency (PRF) is low due to a distance from a target (target) or hardware constraints. Therefore, it is required to obtain a high resolution ISAR image only by devising software without modifying hardware, even in the low PRF radar.

In order to improve resolution in an azimuth direction in the ISAR image, it is necessary to increase a synthetic aperture time, and at that time, a Doppler bandwidth of a signal from the target also increases, and therefore, in order to express the signal from the target, it is necessary to perform observation with the PRF equal to or more than the Doppler bandwidth increased by a Nyquist condition. However, since the PRF of the radar depends on the hardware and the distance to the observation target, it is difficult to optionally increase the PRF.

A method of simulating a reception signal observed at a high PRF by upsampling and performing a frequency shift on the reception signal observed at the low PRF during the image reconstruction processing is considered. However, in order to accurately simulate a high PRF target signal, highly accurate observation information of the target is necessary. When upsampling is performed up to the necessary PFR, a data amount of the reception signal also increases, and thus, a load of image processing also increases.

In PTL 1, various types of correction are made on the coarse images obtained by subdividing the data sample into the plurality of subapertures, and then the coarse images are synthesized to obtain the single high resolution image, but the increase in the image processing load is not improved. In PTL 2, an absolute position of the target image is calculated by correcting the image dimension by the rotation speed of the main axis of the plurality of ISAR images obtained by subdividing the synthetic aperture length in time series after the compression for the image center of the target obtained from the reception signal and the imaging of the target, and although the target position can be observed with high accuracy, it is not possible to obtain the high resolution image from the reception signal observed at the low PRF without increasing the image processing load. Therefore, it has been required to develop a technology of reproducing the high resolution ISAR image from the reception signal observed at the low PRF without increasing a calculation cost of the image reconstruction processing.

An object of the present disclosure is to provide an image reconstruction device for an inverse synthetic aperture radar, an image reconstruction method, and a recording medium that solve the problems described above.

**Solution to Problem**

A first aspect of the present disclosure is an image reconstruction device including a range compression processing unit that performs range compression on a reception signal obtained by observation of an object by an inverse synthetic aperture radar, and an image correction processing unit that subdivides the signal after the range compression into a plurality of subapertures in a time direction in such a way that adjacent subapertures partially overlap each other, performs azimuth compression, quadratic phase addition, and de-rotation for each subaperture, and then synthesizes the plurality of subapertures to perform secondary azimuth compression using a quadratic phase, and reproduces an image.

A second aspect of the present disclosure is an image reconstruction method including performing range compression on a reception signal obtained by observation of an object by an inverse synthetic aperture radar, subdividing the signal after the range compression into a plurality of subapertures in a time direction in such a way that adjacent subapertures partially overlap each other, performing azimuth compression, quadratic phase addition, and de-rotation for each subaperture, and synthesizing the plurality of subapertures to perform secondary azimuth compression using a quadratic phase, and reproducing an image.

A third aspect of the present disclosure is a recording medium storing a program for causing a computer of an image reconstruction device to execute performing range compression on a reception signal obtained by observation of an object by an inverse synthetic aperture radar, subdividing the signal after the range compression into a plurality of subapertures in a time direction in such a way that adjacent subapertures partially overlap each other, performing azimuth compression, quadratic phase addition, and de-rotation for each subaperture, and synthesizing the plurality of subapertures to perform secondary azimuth compression using a quadratic phase, and reproducing an image.

**Advantageous Effects of Invention**

According to the present disclosure, there is an effect that a high resolution ISAR image can be reproduced from a reception signal observed at a low PRF by an ISAR radar without increasing an image processing load.

**Brief Description of Drawings**

[Fig. 1] Fig. 1 is a block diagram of an inverse synthetic aperture image reconstruction system according to the present disclosure.

[Fig. 2] Fig. 2 is a graph for describing a method of dividing reception data related to an inverse synthetic aperture image according to the present disclosure into a plurality of subapertures.

[Fig. 3] Fig. 3 is a block diagram of a configuration example of an ISAR image reconstruction device according to a configuration of the present disclosure.

[Fig. 4] Fig. 4 is a block diagram illustrating details of image correction processing of the ISAR image reconstruction device illustrated in Fig. 3.

[Fig. 5] Fig. 5 is a flowchart for describing an outline of ISAR image reconstruction processing according to the present disclosure.

[Fig. 6] Fig. 6 is a flowchart for describing details of the image correction processing of the ISAR image reconstruction processing illustrated in Fig. 5.

**Example Embodiment**

An image reconstruction device for an inverse synthetic aperture radar (ISAR) that transmits microwaves to a target (target) and receives radio waves reflected from the target to generate an image, an image reconstruction method, and a program will be described in detail with reference to the accompanying drawings together with an example embodiment.

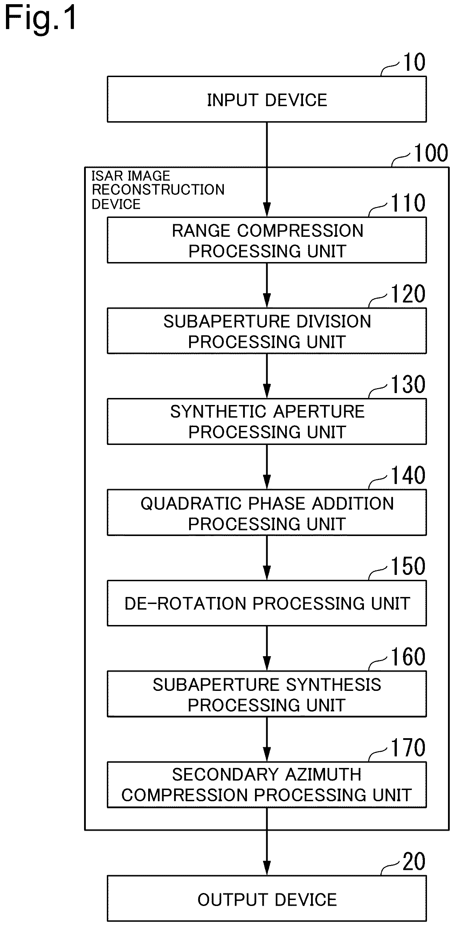

Fig. 1 illustrates a configuration of an inverse synthetic aperture image reconstruction system according to the present disclosure, and includes an input device 10, an output device 20, and an ISAR image reconstruction device 100. The input device 10 reads data obtained by ISAR observation, and for example, reads, as a reception signal, a radio wave (reflection wave) reflected from a target as a result of transmission of a microwave to the target by an ISAR satellite or the like. The ISAR image reconstruction device 100 performs ISAR image processing (range compression processing, synthetic aperture processing, and the like) on the reception signal from the input device 10 to reproduce an ISAR image. The output device 20 outputs the ISAR image reproduced by the ISAR image reconstruction device to the outside.

The ISAR image reconstruction device 100 includes an information processing device such as a personal computer (PC), and implements a desired function by a processor executing software (program related to ISAR image reconstruction processing) stored in a memory. As the processor, in addition to a central processing unit (CPU) that controls the entire device, a graphics processing unit (GPU) that performs image analysis, a general-purpose GPU (GPGPU), a tensor processing unit (TPU) that performs data processing, and the like are applied. In the ISAR image reconstruction device 100, the processor executes the program stored in the memory to implement a plurality of functional units 110 to 170, and specifically, a range compression processing unit 110, a subaperture division processing unit 120, a synthetic aperture processing unit 130, a quadratic phase addition processing unit 140, a de-rotation (de-rotation) processing unit 150, a subaperture synthesis processing unit 160, and a secondary azimuth compression processing unit 170 are implemented.

In the ISAR image processing, clear imaging can be performed even when the target is disturbed by compressing, into one point, the reflection waves from the target two-dimensionally spread in a range direction and an azimuth direction by using a pulse compression technology (compression in the range direction) and a synthetic aperture technology (compression in the azimuth direction). The range compression processing unit 110 performs range compression on the reception signals, and compresses, in the range direction, the reception signals that are the reflection waves from the target spreading two-dimensionally in two directions orthogonal to each other, which are a traveling direction (azimuth) of the target with respect to an ISAR antenna and an antenna front direction (range). The range compression processing unit 110 generates a range compression signal.

The subaperture division processing unit 120 time-divides the range compression signal by subaperture division processing. Specifically, the subaperture division processing unit 120 divides the range compression signal in such a way that adjacent subapertures partially overlap (overlap), and multiplies an overlapping portion (overlapping portion) by a first half portion or a second half portion of a window function (Hanning window) in such a way that the adjacent subapertures are smoothly connected at the time of subaperture synthesis processing. The synthetic aperture processing unit 130 performs azimuth compression by the synthetic aperture processing for each subaperture of the range compression signal. The azimuth compression is performed by using a compression parameter set according to relative movement between an ISAR and the target, but the compression parameter may be set in advance by the ISAR observation. The synthetic aperture processing unit 130 performs the azimuth compression on the range compression signal for each subaperture to generate a range and azimuth compression signal.

The quadratic phase addition processing unit 140 executes quadratic phase addition processing for secondary azimuth compression processing on the range and azimuth compression signal, and adds a phase that becomes a continuous linear chirp between a plurality of subapertures. The linear chirp linearly changes an instantaneous frequency with a time, adds an increase rate (chirp rate) of a frequency of an integer multiple to a start frequency according to a lapse of time, and linearly increases the frequency between the plurality of subapertures according to the lapse of the time. The de-rotation processing unit 150 performs de-rotation (de-rotation) processing on the range and azimuth compression signal subjected to the quadratic phase addition processing, performs frequency shift processing for canceling a change (Doppler rate) in a Doppler frequency of a signal from the target (target signal), and keeps a data frequency after the de-rotation within a pulse repetition frequency (PRF) at the time of reception of the target signal.

The subaperture synthesis processing unit 160 synthesizes all the subapertures of the range and azimuth compression signal after the de-rotation into one by the subaperture synthesis processing. In the subaperture synthesis processing, the subaperture synthesis can be smoothly performed by performing addition processing of the plurality of subapertures by an effect of the window function multiplied by the overlapping portion of the adjacent subapertures in the subaperture division processing. Unlike the azimuth compression performed by the synthetic aperture processing unit 130 for each subaperture of the reception data, the secondary azimuth compression processing unit 170 performs secondary azimuth compression by using a quadratic phase added by the quadratic phase addition processing unit 140 on the range and azimuth compression signal obtained by synthesizing the plurality of subapertures to acquire a high resolution ISAR image. As a result, the ISAR image reconstruction device 100 generates an ISAR reconstruction image from the reception signals obtained by the ISAR observation. The output device 20 outputs the ISAR reconstruction image to the outside. For example, the ISAR reconstruction image is output to a subsequent information processing device or output to an external display device.

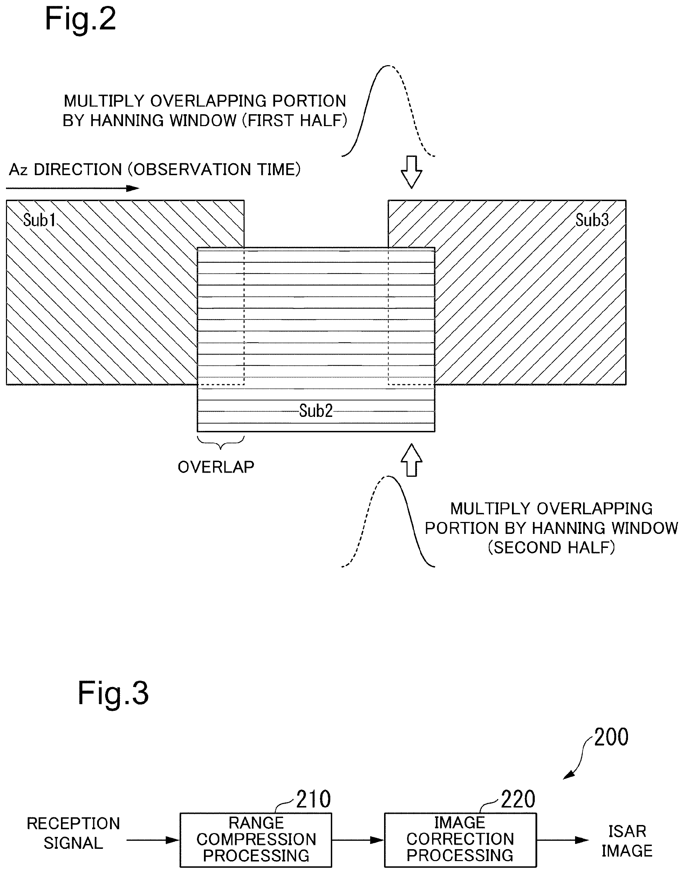

Next, operation of the inverse synthetic aperture image reconstruction system illustrated in Fig. 1 will be described in detail. The input device 10 inputs the reception signal acquired by the ISAR observation to supply the reception signal to the ISAR image reconstruction device 100. In the ISAR image reconstruction device 100, the range compression processing unit 110 performs the range compression on the reception signal related to the ISAR observation to generate the range compression signal. The subaperture division processing unit 120 performs the subaperture division processing on the range compression signal in such a way that a frequency band of the target (target) signal included in the subaperture becomes equal to or less than the pulse repetition frequency (PRF), and generates the plurality of subapertures in a time domain. Fig. 2 illustrates a method of dividing the plurality of subapertures, in which the division is performed in such a way that adjacent apertures overlap (overlap) each other, and the window function (Hanning window) is multiplied to the overlapping (overlapping) portion in such a way that the adjacent subapertures are smoothly connected in the subaperture synthesis processing. Fig. 2 illustrates three subapertures (Sub1 to Sub3) adjacent in the azimuth direction (Az direction) related to an observation time, and for example, in an overlapping portion between a rear portion of the subaperture Sub2 and a front portion of the subaperture Sub3, the rear portion of the subaperture Sub2 is multiplied by the Hanning window (second half), and the front portion of the subaperture Sub3 is multiplied by the Hanning window (first half).

For example, in the case of performing the ISAR observation on a space object such as space debris, it can be assumed that a difference in Doppler frequency of a reflection wave from each point of an object at each time is small, and a spread of a Doppler band of a reception signal at each time is narrow. Therefore, the Doppler frequency at each time of the reception signal from orbit information of the object is estimated, and a size of the subaperture is determined in such a way that a bandwidth of the reception signal included in the subaperture is equal to or less than the pulse repetition frequency (PRF). The subapertures Sub1 to Sub3 illustrated in Fig. 2 have the size determined in this manner, and partially overlap (overlap) each other in the time domain.

The synthetic aperture processing unit 130 performs the azimuth compression on the range compression signal by the synthetic aperture processing in units of subapertures to generate the range and azimuth compression signal. Various types of the synthetic aperture processing have been developed, and the synthetic aperture processing applied in the present example is not particularly limited. The quadratic phase addition processing unit 140 adds a linear chirp $K_{scl}$ to the range and azimuth compression signal (hereinafter, referred to as a signal S) in units of subapertures. The quadratic phase addition processing is performed in a frequency domain, and a signal S' after the quadratic phase addition is represented by the following Expression 1. In Expression 1, a reference sign S' denotes the signal after the quadratic phase addition, a reference sign S denotes the signal subjected to the azimuth compression (range and azimuth compression signal), a reference sign $K_{scl}$ denotes the linear chirp, and a reference sign $f_\eta$ denotes the Doppler frequency.

[Expression 1]

$$S' = S \cdot \exp\left(-j\frac{\pi}{K_{scl}}f_\eta^2\right)$$

The de-rotation processing unit 150 performs phase rotation of a chirp $K_{rot}$ in order to keep a change amount of the Doppler frequency of the reception signal within the pulse repetition frequency (PRF) at the time of the ISAR observation. The de-rotation processing is performed in the time domain, and a signal $S_{rot}$ after the de-rotation is generated. The following Expression 2 indicates the chirp $K_{rot}$ and the signal $S_{rot}$ after the de-rotation. In Expression 2, the reference sign S' indicates the signal after the quadratic phase addition, a reference sign $S_{rot}$ indicates the signal after the de-rotation, a reference sign $v_{tar}$ indicates a speed of the target, a reference sign $\lambda$ indicates a wavelength of a carrier wave, a reference sign $R_{ZD}$ indicates a distance of the target at a zero Doppler, a reference sign $f_{DC}$ indicates the Doppler frequency at an observation center time, a reference sign $\eta$ indicates a time based on the zero Doppler, and a reference sign $\alpha$ indicates a de-rotation parameter. The de-rotation parameter $\alpha$ is set as "$\alpha$ = 1 - PRF/BW (BW indicates a bandwidth of the target signal for entire observation)". In some example embodiments of the present disclosure, although the de-rotation parameter $\alpha$ assumes that the target is a point, it is desirable to add a margin of several percent to several tens of percent to the bandwidth of the target signal in practice.

[Expression 2]

$$K_{rot} = \frac{2v_{tar}^2}{\lambda R_{ZD}} \alpha$$

$$S_{rot} = S' \cdot \exp\{-(2\pi f_{DC}\eta + \pi K_{rot}\eta^2)\}$$

The subaperture synthesis processing unit 160 executes the subaperture synthesis processing by performing the addition processing of all the subapertures in the time domain. The secondary azimuth compression processing unit 170 executes fast Fourier transform (FFT) on the signal subjected to the subaperture synthesis to perform the azimuth compression using a reference signal $S_{ref}$ of a chirp $K_{eff}$, and finally performs inverse FFT to generate the ISAR image. The following Expression 3 indicates the chirp $K_{eff}$ and the reference signal $S_{ref}$, the reference sign $f_\eta$ indicates the Doppler frequency, the reference sign $K_{scl}$ indicates the linear chirp, and a reference sign $K_{rot}$ indicates the chirp used in the de-rotation. The output device 20 outputs the ISAR image reproduced by the ISAR image reconstruction device 100.

[Expression 3]

$$K_{eff} = K_{scl} - K_{rot}$$

$$S_{ref} = \exp\left(j\frac{\pi}{K_{eff}} f_\eta^2\right)$$

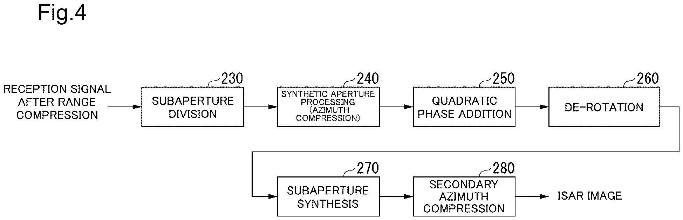

A configuration example of the present disclosure will be described with reference to Figs. 3 and 4. Fig. 3 is a block diagram illustrating functions of a configuration example of an ISAR image reconstruction device 200 according to the present disclosure, and the ISAR image reconstruction device 200 executes range compression processing 210 and image correction processing 220. In the range compression processing 210, the range compression is performed on the reception signal by the ISAR observation. The image correction processing 220 is a core of some example embodiments of the present disclosure, and performs image correction on the reception signal after the range compression. The image correction includes the azimuth compression, the quadratic phase addition, and the de-rotation for each subaperture, and after all the subapertures are synthesized, the secondary azimuth compression using the quadratic phase is performed. As a result, it is possible to reproduce a high resolution ISAR image even in low PRF radar observation.

Fig. 4 is a block diagram illustrating detailed functions of the image correction processing 220. The reception signal after the range compression is divided into the plurality of subapertures in the time direction by subaperture division 230. Thereafter, synthetic aperture processing (azimuth compression) 240, quadratic phase addition 250, and de-rotation 260 are performed for each subaperture, and all the subapertures are synthesized into one by subaperture synthesis 270. Secondary azimuth compression 280 using the quadratic phase is performed on the reception signal after the subaperture synthesis, and an ISAR image is generated.

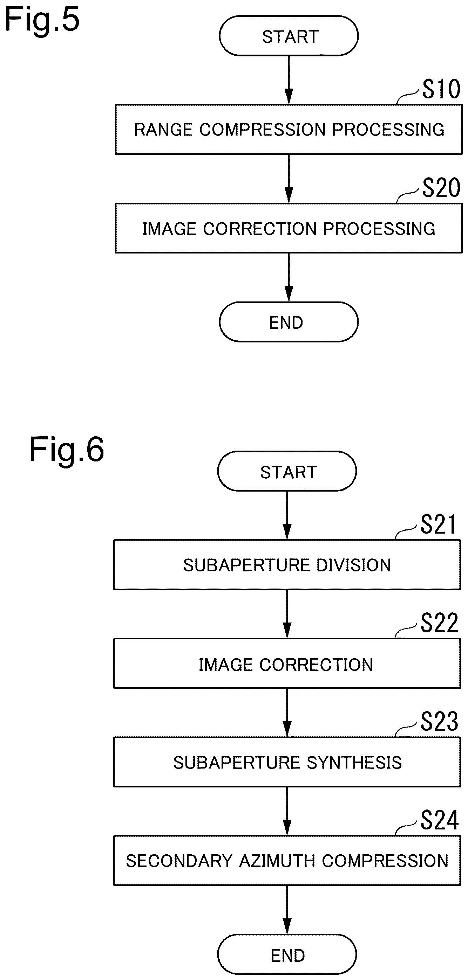

Fig. 5 is a flowchart for describing an example of the functions according to the present disclosure, and relates to the configuration example of Fig. 3. In the ISAR image reconstruction device 200, the range compression processing (S10) and the image correction processing (S20) are executed. Fig. 6 is a flowchart for describing details of the image correction processing (S20) that is the core function of some example embodiments of the present disclosure. After the reception signal after the range compression is subdivided into the plurality of subapertures in the time direction (S21), the image correction is performed (S22). In the image correction, the azimuth compression, the quadratic phase addition, and the de-rotation are performed for each subaperture. Thereafter, the plurality of subapertures is synthesized into one (S23), and the secondary azimuth compression using the quadratic phase is performed (S24). In the present disclosure, the azimuth compression, the quadratic phase addition, and the de-rotation for each subaperture are performed on the reception signal after the range compression. In the quadratic phase addition, as represented in Expression 1, the linear chirp $K_{scl}$ is added to the signal S that has been subjected to the azimuth compression for each subaperture to transform the signal S into the signal S'. In the de-rotation, as represented in Expression 2, the phase rotation of the chirp $K_{rot}$ is performed to transform the signal S' into the signal $S_{rot}$ after the de-rotation. In the de-rotation, the de-rotation parameter $\alpha$ is set and the target signal after the de-rotation is kept in the PRF. In the secondary azimuth compression, as represented in Expression 3, the secondary azimuth compression using the reference signal $S_{ref}$ including the chirp $K_{eff} = K_{scl} - K_{rot}$ is performed on the signal after the subaperture synthesis.

In the present disclosure, in the ISAR image reconstruction device 200, a processor (CPU, GPU, or the like) executes a range compression program, an image correction program, and the like to implement the functions described above, but a computer program may be stored in a storage medium (semiconductor memory such as a ROM and a RAM), or the computer program may be distributed from another device. The computer program may be a program for achieving a part of the functions described above, or may be a so-called difference file (or a difference program) capable of achieving the functions described above in combination with a program already recorded in a computer system.

In the present disclosure, in the image processing of the inverse synthetic aperture radar (ISAR), the reception signal acquired at the pulse repetition frequency (PRF) lower than a Nyquist frequency is divided in the time direction to generate the plurality of subapertures, the synthetic aperture processing (azimuth compression), the quadratic phase addition (linear chirp addition), and the de-rotation are performed for each subaperture, and all the subapertures are finally synthesized. As a result, even with low PRF observation data of a space situation monitoring radar, it is possible to reproduce a high resolution ISAR image without using highly accurate orbit information of a target. The Nyquist frequency means a half frequency of a sampling frequency in a sampling theorem, but is not limited to this, and is a frequency that satisfies a Nyquist condition for reproducing an original signal when specific signals are sampled and reproduced.

The present disclosure is not limited to the example embodiment described above, and the configuration and the functions of the ISAR image reconstruction device are not limited to those of Figs. 1 to 6. The present disclosure does not limit the synthetic aperture processing, and is applicable regardless of a method of the synthetic aperture processing. The window function for multiplying the plurality of subapertures in the subaperture division processing is not limited to the Hanning window, and a window function that can smoothly connect the overlapping portions (overlapping portions) of the adjacent subapertures at the time of the subaperture synthesis can be applied. Although there is a possibility that azimuth ambiguity (azimuth ambiguity component that generates a phase difference at the time of image alignment) increases, the plurality of subapertures may be synthesized by adopting a half of the overlapping portions (overlapping portions) of each subaperture without multiplying the plurality of subapertures by the window function.

Effects obtained by the ISAR image reconstruction device (method) in consideration of the means for solving the problem of the present disclosure will be described.

(1) In the present disclosure, it is possible to reproduce a high resolution ISAR image by dividing a reception signal (such as a reflection wave received by irradiating a target such as a space object or an object on the ground with a microwave) acquired with a low PRF in the ISAR observation into a plurality of subapertures in the time direction (azimuth direction), performing synthetic aperture processing for each subaperture, and then synthesizing the plurality of subapertures.

(2) In the division into the plurality of subapertures in the time direction, the division is performed in such a way that a Doppler frequency of a target signal (such as the reflection wave from the target) does not exceed the PRF at the time of the observation. In a case where accuracy of orbit information of the target is low, image reconstruction processing can be continued by reducing a data amount included in the subapertures according to indefiniteness of the target (alternatively, by reducing a size of the subapertures).

(3) Even in a case where the highly accurate orbit information of the target to be observed cannot be obtained at the time of the observation by the low PRF radar, it is possible to obtain a high resolution ISAR reconstruction image without modifying the hardware by performing the synthetic aperture processing in units of subapertures and the azimuth compression processing by a quadratic phase (linear chirp) independent of orbit accuracy of the target.

(4) In the present disclosure, upsampling (increase in sampling frequency) of the reception signal is not included, and the image reconstruction processing can be performed with the low PRF reception signal, and an increase in a calculation load due to the upsampling can be avoided, and an increase in calculation cost of the image reconstruction processing can also be prevented.

The technical features of the image reconstruction device according to the present disclosure can be summarized as Supplementary Notes 1 to 5.

(Supplementary Note 1) An image reconstruction device includes: a range compression processing unit that performs range compression on a reception signal obtained by observation of an object by an inverse synthetic aperture radar; and an image correction processing unit that subdivides the signal after the range compression into a plurality of subapertures in a time direction in such a way that adjacent subapertures partially overlap each other, performs azimuth compression, quadratic phase addition, and de-rotation for each subaperture, and then synthesizes the plurality of subapertures to perform secondary azimuth compression using a quadratic phase, and reproduces an image.

(Supplementary Note 2) In the image correction processing unit, a window function may be applied to an overlapping portion of the adjacent subapertures in the plurality of subapertures.

(Supplementary Note 3) In the image correction processing unit, a first chirp may be added to the signal after the azimuth compression in the quadratic phase addition.

(Supplementary Note 4) In the image correction processing unit, in the de-rotation, phase rotation of a second chirp may be performed on the signal after the quadratic phase addition.

(Supplementary Note 5) In the image correction processing unit, the secondary azimuth compression may be performed on the signal after the synthesis of the plurality of subapertures by using a reference signal including a third chirp related to a difference between the first chirp and the second chirp.

As described in Supplementary Notes 6 and 7, the present disclosure also includes a recording medium storing the image reconstruction method and the program.

(Supplementary Note 6) An image reconstruction method includes: performing range compression on a reception signal obtained by observation of an object by an inverse synthetic aperture radar; subdividing the signal after the range compression into a plurality of subapertures in a time direction in such a way that adjacent subapertures partially overlap each other; performing azimuth compression, quadratic phase addition, and de-rotation for each subaperture; and synthesizing the plurality of subapertures to perform secondary azimuth compression using a quadratic phase, and reproducing an image.

(Supplementary Note 7) A recording medium stores a program for causing a computer of an image reconstruction device to execute: performing range compression on a reception signal obtained by observation of an object by an inverse synthetic aperture radar; subdividing the signal after the range compression into a plurality of subapertures in a time direction in such a way that adjacent subapertures partially overlap each other; performing azimuth compression, quadratic phase addition, and de-rotation for each subaperture; and synthesizing the plurality of subapertures to perform secondary azimuth compression using a quadratic phase, and reproducing an image.

While the present disclosure has been particularly shown and described with reference to example embodiments thereof, the present disclosure is not limited to these example embodiments. It will be understood by those of ordinary skill in the art that various changes in form and details may be made therein without departing from the spirit and scope of the present disclosure as defined by the claims. And each embodiment can be appropriately combined with other embodiments.

This application is based upon and claims the benefit of priority from Japanese patent application No. 2023-095429, filed on June 9, 2023, the disclosure of which is incorporated herein in its entirety by reference.

**Industrial Applicability**

In the present disclosure, an inverse synthetic aperture radar (ISAR) reproduces an ISAR image by receiving a reflection wave of a microwave irradiated to an object and performing image correction processing such as range compression and azimuth compression, but an application range of the present disclosure is not limited to space situation observation of a space object (such as space debris), and the present disclosure is applicable to observation of a structure on the ground (such as an oil tank), observation of a ship, observation of ground sinking in a specific region on the ground, observation of environmental destruction such as water source pollution and deforestation, and the like.

**Reference Signs List**

| | |
|---|---|
| 10 | input device |
| 20 | output device |
| 100, 200 | ISAR image reconstruction device |
| 110 | range compression processing unit |
| 120 | subaperture division processing unit |
| 130 | synthetic aperture processing unit |
| 140 | quadratic phase addition processing unit |
| 150 | de-rotation processing unit |
| 160 | subaperture synthesis processing unit |
| 170 | secondary azimuth compression processing unit |
| 210 | range compression processing |
| 220 | image correction processing |
| 230 | subaperture division |
| 240 | synthetic aperture processing (azimuth compression) |
| 250 | quadratic phase addition |
| 260 | de-rotation |

270    subaperture synthesis
280    secondary azimuth compression

**Claims**

1.  An image reconstruction device comprising:

    a range compression processing unit that performs range compression on a reception signal obtained by observation of an object by an inverse synthetic aperture radar; and
    an image correction processing unit that subdivides the signal after the range compression into a plurality of subapertures in a time direction in such a way that adjacent subapertures partially overlap each other, performs azimuth compression, quadratic phase addition, and de-rotation for each subaperture, and then synthesizes the plurality of subapertures to perform secondary azimuth compression using a quadratic phase, and reproduces an image.

2.  The image reconstruction device according to claim 1, wherein, in the image correction processing unit, a window function is applied to an overlapping portion of adjacent subapertures in the plurality of subapertures.

3.  The image reconstruction device according to claim 1, wherein, in the image correction processing unit, a first chirp is added to the signal after the azimuth compression in the quadratic phase addition.

4.  The image reconstruction device according to claim 3, wherein, in the image correction processing unit, in the de-rotation, phase rotation of a second chirp is performed on the signal after the quadratic phase addition.

5.  The image reconstruction device according to claim 4, wherein, in the image correction processing unit, the secondary azimuth compression is performed on the signal after the synthesis of the plurality of subapertures by using a reference signal including a third chirp related to a difference between the first chirp and the second chirp.

6.  An image reconstruction method comprising:

    performing range compression on a reception signal obtained by observation of an object by an inverse synthetic aperture radar;
    subdividing the signal after the range compression into a plurality of subapertures in a time direction in such a way that adjacent subapertures partially overlap each other;
    performing azimuth compression, quadratic phase addition, and de-rotation for each subaperture; and
    synthesizing the plurality of subapertures to perform secondary azimuth compression using a quadratic phase, and reproducing an image.

7.  A recording medium storing a program for causing a computer of an image reconstruction device to execute:

    performing range compression on a reception signal obtained by observation of an object by an inverse synthetic aperture radar;
    subdividing the signal after the range compression into a plurality of subapertures in a time direction in such a way that adjacent subapertures partially overlap each other;
    performing azimuth compression, quadratic phase addition, and de-rotation for each subaperture; and
    synthesizing the plurality of subapertures to perform secondary azimuth compression using a quadratic phase, and reproducing an image.

# Fig.1

INPUT DEVICE ⌐10

ISAR IMAGE RECONSTRUCTION DEVICE ⌐100

RANGE COMPRESSION PROCESSING UNIT ⌐110

SUBAPERTURE DIVISION PROCESSING UNIT ⌐120

SYNTHETIC APERTURE PROCESSING UNIT ⌐130

QUADRATIC PHASE ADDITION PROCESSING UNIT ⌐140

DE-ROTATION PROCESSING UNIT ⌐150

SUBAPERTURE SYNTHESIS PROCESSING UNIT ⌐160

SECONDARY AZIMUTH COMPRESSION PROCESSING UNIT ⌐170

OUTPUT DEVICE ⌐20

# Fig.2

MULTIPLY OVERLAPPING PORTION
BY HANNING WINDOW (FIRST HALF)

Az DIRECTION (OBSERVATION TIME)

Sub1

Sub3

Sub2

OVERLAP

MULTIPLY OVERLAPPING
PORTION BY HANNING WINDOW
(SECOND HALF)

# Fig.3

200

RECEPTION
SIGNAL

210

RANGE
COMPRESSION
PROCESSING

220

IMAGE
CORRECTION
PROCESSING

ISAR
IMAGE

Fig.4

RECEPTION SIGNAL
AFTER RANGE
COMPRESSION → | SUBAPERTURE DIVISION |（230） → | SYNTHETIC APERTURE PROCESSING (AZIMUTH COMPRESSION) |（240） → | QUADRATIC PHASE ADDITION |（250） → | DE-ROTATION |（260）

| SUBAPERTURE SYNTHESIS |（270） → | SECONDARY AZIMUTH COMPRESSION |（280） → ISAR IMAGE

## Fig.5

```
START
  │
  ▼
```

S10

RANGE COMPRESSION PROCESSING

```
  │
  ▼
```

S20

IMAGE CORRECTION PROCESSING

```
  │
  ▼
```

END

## Fig.6

```
START
  │
  ▼
```

S21

SUBAPERTURE DIVISION

```
  │
  ▼
```

S22

IMAGE CORRECTION

```
  │
  ▼
```

S23

SUBAPERTURE SYNTHESIS

```
  │
  ▼
```

S24

SECONDARY AZIMUTH COMPRESSION

```
  │
  ▼
```

END

## INTERNATIONAL SEARCH REPORT

International application No.

**PCT/JP2024/018657**

| A. | CLASSIFICATION OF SUBJECT MATTER |
|---|---|

*G01S 13/90*(2006.01)i
FI:    G01S13/90 164; G01S13/90 191

According to International Patent Classification (IPC) or to both national classification and IPC

| B. | FIELDS SEARCHED |
|---|---|

Minimum documentation searched (classification system followed by classification symbols)

G01S7/00-7/42: G01S13/00-13/95

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

IEEE Xplore

| C. | DOCUMENTS CONSIDERED TO BE RELEVANT |
|---|---|

| Category* | Citation of document, with indication, where appropriate, of the relevant passages | Relevant to claim No. |
|---|---|---|
| P, A | JP 2023-180643 A (NEC CORPORATION) 21 December 2023 (2023-12-21) entire text, all drawings | 1-7 |
| A | WO 2017/195297 A1 (MITSUBISHI ELECTRIC CORPORATION) 16 November 2017 (2017-11-16) entire text, all drawings | 1-7 |
| A | US 5343204 A (UNISYS CORPORATION) 30 August 1994 (1994-08-30) entire text, all drawings | 1-7 |
| A | US 6255981 B1 (RAYTHEON COMPANY) 03 July 2001 (2001-07-03) entire text, all drawings | 1-7 |
| A | JP 2017-003494 A (KABUSHIKI KAISHA TOSHIBA) 05 January 2017 (2017-01-05) entire text, all drawings | 1-7 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 July 2024** | **16 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**EP 4 718 116 A1**

**INTERNATIONAL SEARCH REPORT**

| International application No. |
|---|
| **PCT/JP2024/018657** |

**C. DOCUMENTS CONSIDERED TO BE RELEVANT**

| Category* | Citation of document, with indication, where appropriate, of the relevant passages | Relevant to claim No. |
|---|---|---|
| A | NOVIELLO, Carlo et al. Fast and Accurate ISAR Focusing Based on a Doppler Parameter Estimation Algorithm. IEEE Geoscience and Remote Sensing Letters. March 2017, vol. 14, no. 3, pp. 349-353, DOI: 10.1109/LGRS.2016.2641498<br>entire text, all drawings | 1-7 |
| A | MARCHETTI, Emidio et al. Space-Based Sub-THz ISAR for Space Situational Awareness Concept and Design. IEEE Transactions on Aerospace and Electronic Systems. June 2021, vol. 58, no. 3, pp. 1558-1573, DOI: 10.1109/TAES.2021.3126375<br>entire text, all drawings | 1-7 |

Form PCT/ISA/210 (second sheet) (July 2022)

**INTERNATIONAL SEARCH REPORT**
Information on patent family members

International application No.

**PCT/JP2024/018657**

| Patent document cited in search report | | | Publication date (day/month/year) | Patent family member(s) | Publication date (day/month/year) |
|---|---|---|---|---|---|
| JP | 2023-180643 | A | 21 December 2023 | (Family: none) | |
| WO | 2017/195297 | A1 | 16 November 2017 | (Family: none) | |
| US | 5343204 | A | 30 August 1994 | (Family: none) | |
| US | 6255981 | B1 | 03 July 2001 | (Family: none) | |
| JP | 2017-003494 | A | 05 January 2017 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6255981 B1
- JP 2017003494 A
- JP 2023095429 A